# EUROPEAN PATENT APPLICATION

(11) **EP 4 518 217 A1**
(43) Date of publication of application: **05.03.2025**
(21) Application number: 22939154.5
(22) Date of filing: 28.04.2022
(51) Int. Cl.: H04L 5/00, H04W 52/02

(54) **CONFIGURATION METHOD AND APPARATUS FOR NETWORK ENERGY-SAVING CELL**

(71) Applicant: FUJITSU LIMITED, Kawasaki-shi, Kanagawa 211-8588 (JP)
(72) Inventor: LU, Yang, Beijing 100022 (CN); ZHANG, Lei, Beijing 100022 (CN)
(74) Representative: Haseltine Lake Kempner LLP
(86) International application number: PCT/CN2022/090097
(87) International publication number: WO 2023/206304

(57) **Abstract**

Embodiments of the present disclosure provide a method and an apparatus for configuring a network energy-saving cell, and the method for configuring a network energy-saving cell includes: a network device transmits first information to a terminal equipment, the first information being used to configure a second cell to the terminal equipment so that the network device serves for the terminal equipment by using the second cell; wherein energies needed by the network device in operating the second cell are lower than energies needed by the network device in operating a first cell.

## Description

### TECHNICAL FIELD

Embodiments of the present disclosure relate to the technical field of communications.

### BACKGROUND

Since a NR (New Radio) base station needs to operate on a large bandwidth (such as 100MHz), it needs to use a large number of ports (64T/64R) and a shorter TTI (transmission time interval) (such as 1ms), energy consumption of the NR base station in terms of functions such as baseband processing, digital front end, etc. is significantly higher than that of an LTE (Long Term Evolution) base station. And an FR2 (frequency range 2) operating frequency (>6GHz) of NR is higher, and the higher a frequency point, the greater a path loss of a signal, so a design principle of NR is to use a narrower beam to transmit the signal farther. In this way, the number of antenna units used by the NR base station to perform analog beamforming will be greatly increased, which leads to increase in the number of radio frequency units and the number of radio frequency channels for transmitting and receiving signals, each radio frequency channel is provided with a power amplifier (PA), the energy consumption of the PA will account for about 80% of the energy consumption of the whole base station, and the energy consumption of the base station will increase with the increase of the number of PAs. A current FR1 (frequency range 1) frequency band AAU (Active Antenna Unit) generally uses 192 antenna units and supports 64 channels, which is much larger than at most 8 channels for LTE.

According to data statistics from operators, average energy consumption of a NR base station is more than three times that of an LTE base station, and nearly 50% of the cost for deploying a 5G (5th generation) network by operators is electricity fee overhead. More importantly, the energy consumption of the NR base station is still high even when there is no traffic, because even when there is no traffic, the base station still needs to transmit common signals, such as an SSB (synchronization signal block), an SIB1 (a system information block type 1) and SI (system information), so the energy use efficiency of the NR base station is greatly reduced. NR network energy saving is a problem demanding prompt solution.

In the related art, in order to save the energy consumption of the NR base station, in 3GPP Rel-15, a NR cell stopping transmitting system information (SI) is supported. The NR cell broadcasts whether to transmit SI in SIB1. If a UE (user equipment) needs to receive the SI (for example, when the UE determines that the saved SI needs to be updated), it may request the base station to resume transmitting SI. The NR base station resumes transmitting the SI when receiving a relevant UE request.

In 3GPP Rel-15/Rel-16 (Third Generation Partnership Project Release 15/ Release 16), network energy saving for NR has been studied, and a proposed solution is to dynamically start and stop reception and/or transmission of signals of a NR cell according to information such as traffic volumes of the NR cell and its adjacent cell and UE measurement reports. When the reception and transmission of signals of the NR cell is stopped, the cell enters into an energy-saving state. In this way, a purpose in which the NR cell turns off a device for transmitting and receiving a signal to save energies in a case where a traffic volume is lower may be achieved. Whether or not the NR enters into the energy-saving state may be decided by the NR cell itself (a distributed network energy-saving scheme) or by an OAM (a centralized network energy-saving scheme). For example, when the traffic volume of the NR cell is lower than a certain threshold, it is determined to enter into the energy-saving state.

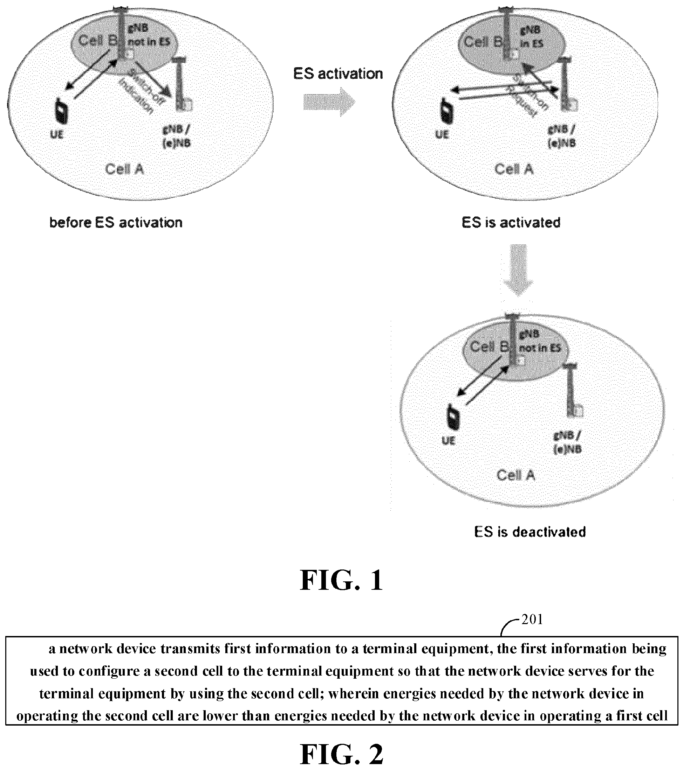

FIG. 1 is a schematic diagram of a distributed network energy-saving scheme. As shown in FIG. 1, in the distributed network energy-saving scheme, when the NR cell enters into the energy-saving state, the base station switches the UE to an adjacent cell, and informs an adj acent NR base station or LTE base station that the NR cell has entered into the energy-saving state, and the adjacent NR/LTE base station will be responsible to the coverage areas and traffic volume of the NR cell. After that, the adj acent NR/LTE base station will determine whether to request the NR cell that has entered into the energy-saving state to resume normal operation according to information such as its own traffic volume, UE measurement report. For example, when the traffic volume of the adjacent NR/LTE base station reaches a certain threshold, the request to the NR cell that has entered into the energy-saving state to resume normal operation is triggered. When the NR cell resumes normal operation, i.e. restarts reception and/or transmission of signals, some UEs that were previously switched to the adjacent NR/LTE cell will switch back to the NR cell.

It should be noted that the above introduction to the technical background is just to facilitate a clear and complete description of the technical solutions of the present disclosure, and is elaborated to facilitate the understanding of persons skilled in the art. It cannot be considered that said technical solutions are known by persons skilled in the art just because these solutions are elaborated in the Background of the present disclosure.

### SUMMARY OF INVENTION

The inventor finds that in the related art, if the NR cell enters into the energy-saving state, it means that the cell stops receiving and transmitting all signals, so a UE originally connected to the cell must switch to an adjacent cell, and a UE originally camping on the cell will perform cell re-selection to camp on an adjacent cell. When the NR cell dynamically enters into the energy-saving state for many times, a UE will frequently switch out of the NR cell or frequently perform cell re-selection, which will affect user experience. In addition, a UE in an energy-saving state cell is migrated to an adjacent cell, which will inevitably increase a load level of the adjacent cell and affect service quality of a UE in the adjacent cell.

For the above problems, embodiments of the present disclosure provide a method and an apparatus for configuring a network energy-saving cell, a network updates configuration of an energy-saving cell, and indicates the configuration of the energy-saving cell to a terminal equipment, so as to avoid a terminal equipment in an energy-saving state cell from being migrated to an adjacent cell, resulting in traffic interruption of the terminal equipment and increasing a load level of the adjacent cell.

According to an aspect of the embodiments of the present disclosure, an apparatus for configuring a network energy-saving cell is provided, configured in a network device, the apparatus includes:
a transmitting unit, configured to transmit first information to a terminal equipment, the first information being used to configure a second cell to the terminal equipment so that the network device serves for the terminal equipment by using the second cell; wherein energies needed by the network device in operating the second cell are lower than energies needed by the network device in operating a first cell.

According to another aspect of the embodiments of the present disclosure, an apparatus for configuring a network energy-saving cell is provided, configured in a terminal equipment, the apparatus includes:
a receiving unit, configured to receive first information transmitted by a network device, the first information being used to configure a second cell to the terminal equipment so that the network device serves for the terminal equipment by using the second cell; wherein energies needed by the network device in operating the second cell are lower than energies needed by the network device in operating a first cell.

One of advantageous effects of the embodiments of the present disclosure lies in: according to the embodiments of the present disclosure, it can realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a distributed network energy-saving scheme;
FIG. 2 is a schematic diagram of a method for configuring a network energy-saving cell in the embodiments of the present disclosure;
FIG. 3 is a schematic diagram in which a first cell and a second cell occupy different frequency domain resources;
FIG. 4 is a schematic diagram in which a first cell and a second cell occupy different frequency domain resources and different time domain resources;
FIG. 5 is a schematic diagram in which a first cell and a second cell occupy identical frequency domain resources and occupy different time domain resources;
FIG. 6 is another schematic diagram of a method for configuring a network energy-saving cell in the embodiments of the present disclosure;
FIG. 7 is a further schematic diagram of a method for configuring a network energy-saving cell in the embodiments of the present disclosure;
FIG. 8 is another schematic diagram of a method for configuring a network energy-saving cell in the embodiments of the present disclosure;
FIG. 9 is another schematic diagram of a method for configuring a network energy-saving cell in the embodiments of the present disclosure;
FIG. 10 is another schematic diagram of a method for configuring a network energy-saving cell in the embodiments of the present disclosure;
FIG. 11 is a schematic diagram of an apparatus for configuring a network energy-saving cell in the embodiments of the present disclosure;
FIG. 12 is another schematic diagram of an apparatus for configuring a network energy-saving cell in the embodiments of the present disclosure;
FIG. 13 is a schematic diagram of a network device in the embodiments of the present disclosure;
FIG. 14 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), Integrated Access and Backhaul (IAB) node or IAB-DU or IAB-donor. And the term " base station " may include some or all functions of a base station, each base station may provide communication coverage to a specific geographic region. The term "a cell" may refer to a base station and/or its coverage area, which depends on the context in which this term is used. Where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT, a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

The embodiments of the present disclosure are described below in conjunction with the drawings and the specific implementations.

### Embodiments of a first aspect

Embodiments of the present disclosure provide a method for configuring a network energy-saving cell.

FIG. 2 is a schematic diagram of a method for configuring a network energy-saving cell in the embodiments of the present disclosure. As shown in FIG. 2, the method includes:
201, a network device transmits first information to a terminal equipment, the first information being used to configure a second cell to the terminal equipment so that the network device serves for the terminal equipment by using the second cell; wherein energies needed by the network device in operating the second cell are lower than energies needed by the network device in operating a first cell.

It should be noted that the above FIG. 2 only schematically describes the embodiments of the present disclosure, but the present disclosure is not limited to this. For example, other some operations can be increased or operations therein may be reduced. Persons skilled in the art may make appropriate modifications according to the above contents, not limited to the records in the above FIG. 2.

According to the method in the embodiments of the present disclosure, it can realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

In the above embodiments, energies needed by the network device in operating the second cell are lower than energies needed by the network device in operating the first cell, i.e., electrical energies consumed by the network device when transmitting at a peak rate by using the second cell are lower than electrical energies consumed by the network device when transmitting at the peak rate by using the first cell, or, electrical energies consumed by the network device when transmitting a unit data volume by using the second cell are lower than electrical energies consumed by the network device when transmitting the unit data volume by using the first cell.

In the above embodiments, compared with operating the first cell by the network device, more electrical energy consumption is saved in operating the second cell by the network device. In order to operate the second cell, that is, to make the second cell serve for the terminal equipment, the network device configures the second cell (i.e., an energy-saving cell) for the terminal equipment which has been configured with the first cell (i.e., a non-energy-saving cell) as a serving cell and is in a connected state, or may configure the second cell (i.e., an energy-saving cell) for the terminal equipment which is newly accessed to a network and is in a connected state, so that the second cell serves for the terminal equipment which is in the connected state. However, the present disclosure is not limited to this, the network device may further transmit system information of the second cell, so that a terminal equipment which is in an idle or inactive state camps on the second cell, so that the second cell serves for the terminal equipment which is in the idle or inactive state.

In the embodiments of the present disclosure, the network device may achieve multiple energy-saving modes via hardware or software, so that the second cell saves more electrical energy consumption than the first cell.

In some embodiments, the network device achieves energy saving in a time domain.

For example, the network device makes a transmission period of a common signal of the second cell to be longer than a transmission period of a common signal of the first cell via software, so that the second cell is more energy saving than the first cell. That is, the transmission period of the common signal of the second cell is extended. The common signal here may be an SSB (synchronization signal block), an SS (synchronization signal), an MIB (main information block), a PBCH (physical broadcast channel), an SIB1 (system information block), SI (system information), and paging, etc. The present disclosure is not limited to this. For example, a transmission period *ssb-periodicity* of an SSB of the second cell is longer than that of the first cell; for another example, transmission periods of an SIB1 and SI of the second cell are longer than those of the first cell; for a further example, a period of a PDCCH (physical downlink control channel) search space for system information of the second cell is longer than that of the first cell; for another example, a paging period *defaultPagingCycle* or a period of a PDCCH search space for paging of the second cell is longer than that of the first cell, etc.

For another example, the network device stops transmission of a part of downlink time units of the second cell via hardware or software, so that the second cell is more energy saving than the first cell. That is, transmission of partial frames, subframes or slots, symbols of the second cell is stopped. For example, the network device realizes that transmission of a part of downlink time units on each BWP of the second cell is stopped by means of e.g. turning off radio frequency units of the second cell in part of downlink time units.

For another example, the network device does not transmit a part of signals of the second cell via software or transmit a simplified common signal of the second cell, so that the second cell is more energy saving than the first cell. The common signal here may be an SSB (synchronization signal block), an SS (synchronization signal), an MIB (main information block), a PBCH (physical broadcast channel), an SIB1 (system information block), SI (system information), and paging, etc. The present disclosure is not limited to this. For example, the second cell does not transmit a full SSB, only transmits a reference signal (SS) in the SSB, stops transmission of an MIB or a PBCH, and does not transmit an SIB1 and SI, that is, the second cell only transmits a simplified SSB and does not transmit system broadcast information. For another example, the second cell only transmits an SSB, and does not transmit an SIB1 and SI, that is, the second cell only transmits a non-cell defined SSB (NCD-SSB).

For a further example, the network device makes the number of symbols of a CSI-RS (channel state information reference signal) of the second cell be less than the number of symbols of a CSI-RS of the first cell via software, so that the second cell is more energy saving than the first cell. That is, compared with the first cell, the number of symbols of the CSI-RS of the second cell is less. The network device may indicate the number of symbols of the CSI-RS of the second cell to the terminal equipment through a CSI-RS resource configuration field in a downlink BWP configuration of the second cell, the present disclosure is not limited to this.

In some embodiments, the network device achieves energy saving in a space domain.

For example, the network device makes the number of transmission antenna elements of the second cell to be less than the number of transmission antenna elements of the first cell via hardware, so that the second cell is more energy saving than the first cell. That is, compared with the first cell, the number of transmission antenna elements including relevant radio frequency channels, power amplifiers of the second cell is less. For example, the network device turns off part of the antenna elements of the second cell, including relevant radio frequency channels, power amplifiers, so that the number of transmission antenna elements of each downlink BWP of the second cell is less than that of the first cell.

For another example, the network device makes the number of transmission beams of the second cell to be less than the number of transmission beams of the first cell via hardware or software, so that the second cell is more energy saving than the first cell. That is, compared with the first cell, the number of transmission beams of the second cell is less. For example, the network device turns off radio frequency hardware corresponding to part of the beams of the second cell, so that the number of beams of the second cell is less than that of the first cell. Here, the beams of the second cell may refer to SSB beams of the second cell, for example, the number of all SSB beams of the second cell is less than that of the first cell. The network device may indicate actual transmission beams of the second cell to the terminal equipment via a *ssb-PositionsInBurst* field in a system information block (SIB1) of the second cell, the present disclosure is not limited to this.

For another example, the network device makes the number of MIMO (multiple input multiple output) antenna ports of the second cell to be less than the number of MIMO antenna ports of the first cell via software, so that the second cell is more energy saving than the first cell. That is, compared with the first cell, the network device transmits signals of the second cell by using fewer MIMO antenna ports. For example, the number of MIMO antenna ports per BWP of the second cell is less than that of the first cell. The network device may indicate the number of MIMO antenna ports of the second cell to the terminal equipment through a downlink demodulation reference signal (DMRS) configuration field in a downlink BWP configuration of the second cell, the present disclosure is not limited to this.

In some embodiments, the network device achieves energy saving in a frequency domain.

For example, the network device makes a service bandwidth of the second cell to be different from a service bandwidth of the first cell via hardware or software, so that the second cell is more energy saving than the first cell. That is, the service bandwidth of the second cell is different from that of the first cell. For example, in a case where the service bandwidth is more energy saving when larger, the service bandwidth of the second cell is greater than that of the first cell; in a case where the service bandwidth is more energy saving when smaller, the service bandwidth of the second cell is smaller than that of the first cell. In this example, it may be that service bandwidths of all BWPs of the second cell are different from that of the first cell, the present disclosure is not limited to this, for example, it may further be that an initial BWP bandwidth of the second cell is different from that of the first cell. The network device may indicate a bandwidth of the second cell to the terminal equipment through a bandwidth configuration field in a BWP configuration of the second cell.

In some embodiments, the network device achieves energy saving in a power domain.

For example, the network device makes transmission power of the second cell to be lower than that of the first cell via software, so that the second cell is more energy saving than the first cell. That is, the transmission power of the second cell is lower than that of the first cell. Here, the transmission power of the second cell may refer to transmission power *ssb-PBCH-BlockPower* of an SSB of the second cell. For example, the transmission power of all SSBs of the second cell is lower than that of the first cell. The present disclosure is not limited to this, it may further be that the transmission power of an SSB of an initial BWP of the second cell is lower than that of the first cell. The network device may indicate transmission power of the second cell to the terminal equipment through an *ssb-PBCH-BlockPower* field in a cell configuration or BWP configuration of the second cell.

Each of the above embodiments only exemplarily describes energy-saving modes, but the present disclosure is not limited to this, appropriate modifications may be further made based on the above each embodiment. For example, each of the above embodiments may be used individually, or one or more of the above embodiments may be combined.

In the embodiments of the present disclosure, an energy-saving state may be divided into different degrees, such as light energy saving, moderate energy saving and deep energy saving, etc. For example, if the network device achieves energy saving in a time domain, a transmission period of an SSB of the second cell is 40ms in case of light energy saving, the transmission period of the SSB of the second cell is 80ms in case of moderate energy saving, and the transmission period of the SSB of the second cell is 160ms in case of deep energy saving. For another example, if the network device achieves energy saving in a space domain, the number of transmission beams of an SSB of the second cell is 4 in case of light energy saving, the number of transmission beams of the SSB of the second cell is 2 in case of moderate energy saving, and the number of transmission beams of the SSB of the second cell is 1 in case of deep energy saving.

Through the above energy-saving modes, the network device only reduces signal transmission of an energy-saving cell in the time domain, frequency domain, space and/or power domain, so as to ensure that the network device may still use the energy-saving cell to serve for a terminal equipment. For example, a terminal equipment in an IDLE/INACTIVE state is capable of normally camping on an energy-saving cell; or, a terminal equipment in a connected state may continue to perform uplink and downlink data transmissions via an energy-saving cell.

In some embodiments, the first cell and the second cell occupy different frequency domain resources, for example, occupied frequency domain resources do not overlap, or the occupied frequency domain resources have different center frequency points.

In the above embodiments, the first cell and the second cell have different PCIs (physical cell identifiers) or center frequency points.

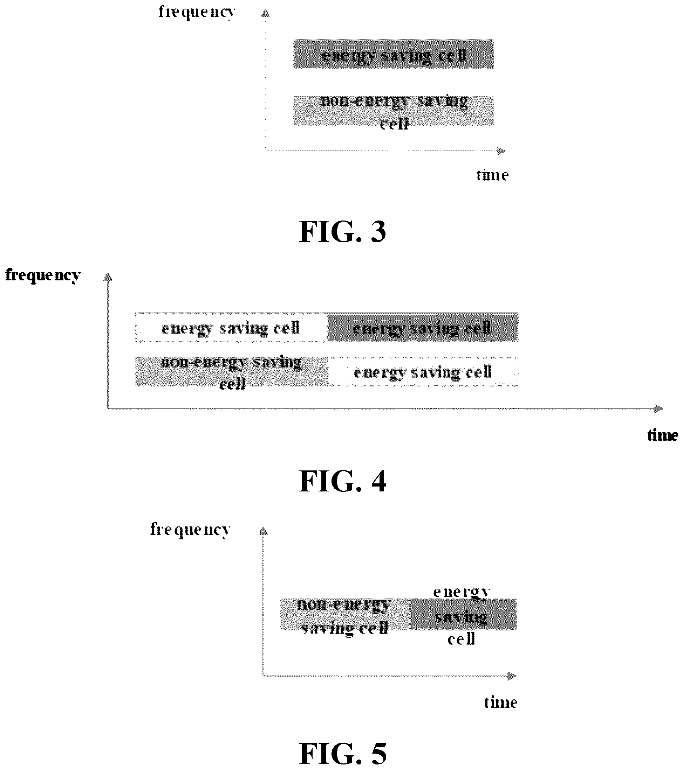

In the above embodiments, if the network device operates the first cell and the second cell at the same time, as shown in FIG. 3, the first cell and the second cell are visible to the terminal equipment at the same time, and different hardware resources need to be equipped for the first cell and the second cell respectively, after the network device migrates all the terminal equipments in the first cell to the second cell, the network device may release air interface resources corresponding to the first cell and stop operating the first cell. In this way, the terminal equipments may be seamlessly switched or migrated to an energy-saving cell. Since different hardware resources need to be equipped for the first cell and the second cell respectively, a network does not need to restart hardware when the network device operates the second cell, which may avoid service interruption of the terminal equipment(s).

In the above embodiments, if the network device does not operate the first cell and the second cell at the same time, that is, the first cell and the second cell occupy different time domain resources, the network device may operate the first cell and the second cell by using the same set of hardware resources, as shown in FIG. 4. In this situation, the network device needs to transmit signals of the first cell and of the second cell by using different time domain resources. Terminal equipment(s) cannot be seamlessly migrated, and after the network device starts to transmit a signal of the second cell, terminal equipment(s) connected to the first cell will be interrupted for serving. Therefore, before the network device operates the second cell, it is necessary to transmit the above first information to the terminal equipment to indicate the terminal equipment to connect to the second cell, so as to prevent service interruption.

In some embodiments, the first cell and the second cell occupy the same frequency domain resources, and the network device does not operate the first cell and the second cell at the same time, that is, the time domain resources occupied by the first cell and the second cell are different, as shown in FIG. 5.

In the above embodiments, the first cell and the second cell occupy the same frequency resources and, since they serve for the same terminal equipment, the first cell and the second cell have the same coverage area. Operating the first cell and the second cell at the same time will cause mutual interference to the terminal equipment, therefore, the first cell and the second cell need to occupy different time domain resources. A network may operate the first cell and the second cell by using the same set of hardware resources.

In the above embodiments, the network may operate the first cell and the second cell by using the same set of hardware resources. In this situation, the network device needs to transmit signals of the first cell and of the second cell by using different time domain resources.

In the above embodiments, PCIs of the first cell and the second cell may be different.

When the PCIs of the first cell and the second cell are different, terminal equipment(s) cannot be seamlessly migrated, and after the network device transmits a signal of the second cell (changes a PCI), that is, after operating the second cell, terminal equipment(s) connected to the first cell will be interrupted for serving. Therefore, before the network device operates the second cell, it is necessary to transmit the above first information to the terminal equipment to indicate the terminal equipment to connect to the second cell, so as to prevent service interruption.

In the above embodiments, the PCIs of the first cell and the second cell may further be identical.

In a case where the PCIs of the first cell and the second cell are identical, after the network device operates the second cell, the second cell may be used to serve for a terminal equipment in the first cell, thereby the terminal equipment may be seamlessly migrated. If there is no need to restart hardware after the network device starts to operate the second cell, a terminal equipment connected to the first cell may not be interrupted for serving.

In some embodiments, the terminal equipment is not configured with a serving cell. In order to operate an energy-saving cell (second cell) and make the energy-saving cell (second cell) to serve for the terminal equipment, the network device may configure the energy-saving cell (second cell) as a secondary cell of the terminal equipment, a primary secondary cell (a special cell SpCell in a SCG (a secondary cell group)), or a primary cell of the terminal equipment.

In some other embodiments, the terminal equipment has been configured with a non-energy-saving cell (first cell) as a serving cell. When the network device enters energy saving, the non-energy-saving cell (the first cell) is changed to an energy-saving cell (the second cell). Further, when the network device leaves energy saving, the energy-saving cell (the second cell) is changed to a non-energy-saving cell (the first cell).

The method in the embodiments of the present disclosure is illustrated below in conjunction with specific scenarios.

In some embodiments, the first cell is a configured or activated secondary cell of a terminal equipment. That is, the network device changes a configured or activated non-energy-saving secondary cell of the terminal equipment to be an energy-saving cell.

In some implementations, the network device does not need to configure the second cell in advance, but only needs to reconfigure parameters of at least one first cell via first information to change the first cell to be the second cell. For example, after the network device enters energy saving, a network side modifies parameter configuration of at least one SCell of the terminal equipment via an RRC (radio resource control) message to configure the at least one SCell as an energy-saving SCell.

In the above implementations, the first cell may be multiple, that is, the terminal equipment has multiple configured or activated secondary cells, and the network device reconfigures parameters of at least one first cell of the terminal equipment via the above first information to change the first cell to be the second cell.

In the above implementations, that the first information is carried via an RRC message is taken as an example, but the present disclosure is not limited to this, the first information may further be carried via other messages or signaling.

The method in the above implementations may be used in a case where the PCIs of the first cell and the second cell are identical or different, and according to the method in the above implementations, signaling overhead is saved.

In some other implementations, the network device configures at least one second cell to be a secondary cell of the terminal equipment via the first information, and enables the terminal equipment to set an initial state of the second cell to be of a deactive state. For example, before the network device enters energy saving, a network side configures an energy-saving cell (the second cell) to be a secondary cell (SCell) in a primary cell group MCG or secondary cell group SCG of the terminal equipment via an RRC message, and enables the terminal equipment to set the initial state of the cell to be of a deactive state.

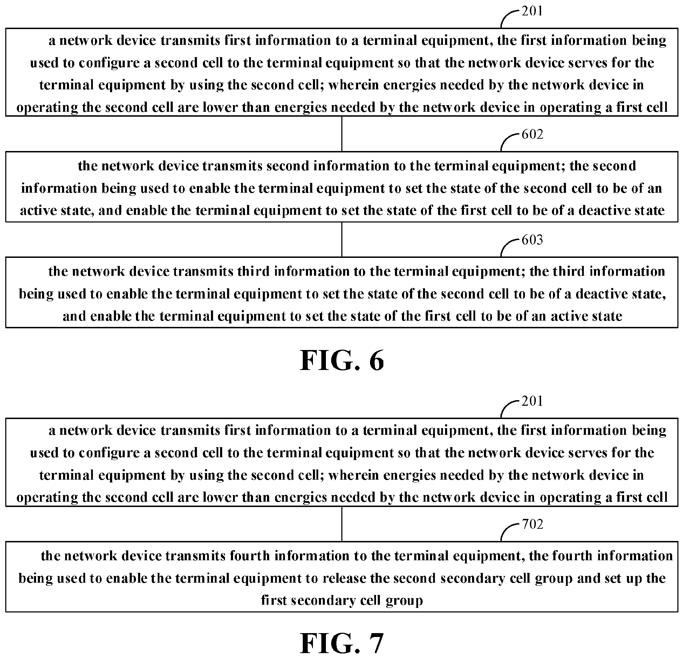

FIG. 6 is another schematic diagram of a method for configuring a network energy-saving cell in the embodiments of the present disclosure.

In the above implementations, as shown in FIG. 6, the network device may further transmit second information (602) to the terminal equipment; enables the terminal equipment to set the state of the second cell to be of an active state via the second information, and enables the terminal equipment to set the state of the first cell to be of a deactive state via the second information. For example, after the network device enters energy saving, the network device sets a state of an energy-saving cell (the second cell) to be of an active state via an MAC CE (media access control control element), and sets a state of a non-energy-saving cell (the first cell) to be of a deactive state via the MAC CE.

In the above implementations, as shown in FIG. 6, the network device may further transmit third information (603) to the terminal equipment; enables the terminal equipment to set the state of the second cell to be of a deactive state via the third information, and enables the terminal equipment to set the state of the first cell to be of an active state via the third information. For example, when the network device leaves energy saving, the network device sets a state of an energy-saving cell (the second cell) to be of a deactive state via an MAC CE, and enables the terminal equipment to set a state of a non-energy-saving cell (the first cell) to be of an active state.

In the above implementations, that the first information is carried via an RRC message and the second information and the third information are carried via an MAC CE is taken as an example, but the present disclosure is not limited to this, the first information, the second information and the third information may further be carried via other messages or signaling, for example, the third information may further be carried via a PDCCH or DCI (downlink control information).

The method in the above implementations may be used in a case where the PCIs of the first cell and the second cell are identical or different. According to the method in the above implementations, when the second cell is configured by the RRC message as a SCell of a terminal equipment, the terminal equipment may start to perform downlink synchronization to the second cell, and when a network side activates the second cell, the second cell may be immediately used to perform data transmission, which reduces service interruption time of the terminal equipment.

In some other implementations, the network device configures at least one second cell to be a secondary cell of a terminal equipment via the first information, and configures a transition timer for the terminal equipment, so that the terminal equipment starts or restarts the transition timer when a preset condition is satisfied, and deactivates the first cell and activates the second cell when the transition timer expires.

For example, the network device configures at least one energy-saving cell (the second cell) for the terminal equipment via an RRC message, and configures a transition timer for a non-energy-saving cell (the first cell), and if a preset condition is satisfied, the terminal equipment starts or restarts the transition timer. When the transition timer expires, the terminal equipment deactivates the non-energy-saving cell (the first cell) and activates the energy-saving cell (the second cell).

In the above implementations, the transition timer is for the first cell, the present disclosure is not limited to this, the transition timer may further be configured for other cells. For example, a transition timer is configured for the second cell, and in a case where a preset condition is satisfied, the terminal equipment starts or restarts the transition timer, and when the transition timer expires, the terminal equipment activates the energy-saving cell (the second cell) and deactivates the non-energy-saving cell (the first cell).

In the above implementations, the network device may deactivate the first cell and activate the second cell when no data is transmitted by the terminal equipment. The preset condition includes at least one of the following:
activating the first cell;
a physical downlink control channel PDCCH is received on a currently activated first cell;
PDCCH schedules an uplink grant or downlink resources on the currently activated first cell;
uplink configuration grant CG data is transmitted on the currently activated first cell; and
downlink configuration grant CG data is received on the currently activated first cell.

For example, when activating the first cell, the terminal equipment starts the transition timer, or when a physical downlink control channel PDCCH is received on a currently activated first cell, and/or when the PDCCH schedules an uplink grant or downlink resources on the currently activated first cell, and/or when uplink configuration grant CG data is transmitted on the currently activated first cell, and/or, when downlink configuration grant CG data is received on the currently activated first cell, the terminal equipment restarts the transition timer.

In the above implementations, that the first information is carried via an RRC message is taken as an example, but the present disclosure is not limited to this, the first information may further be carried via other messages or signaling.

The method in the above implementations may be used in a case where the PCIs of the first cell and the second cell are identical or different. According to the method in the above implementations, when the second cell is configured by the RRC message as a SCell of a terminal equipment, the terminal equipment may start to perform downlink synchronization to the second cell, and when a network side activates the second cell, the second cell may be immediately used to perform data transmission, which reduces service interruption time of the terminal equipment.

In some embodiments, the first cell is a special cell SpCell in a configured or activated first secondary cell group SCG of a terminal equipment. That is, the network device changes a non-energy-saving special cell SpCell in a configured or activated first secondary cell group SCG of a terminal equipment into an energy-saving cell. The special cell SpCell e.g., is a primary secondary cell PSCell, the present disclosure is not limited to this.

In some implementations, the network device does not need to configure the second cell in advance, but only needs to reconfigure parameters of the first cell via first information to change the first cell to be the second cell. For example, after the network device enters energy saving, a network side modifies parameter configuration of a PSCell in SCG configuration of the terminal equipment via an RRC message to configure the PSCell as an energy-saving PSCell.

In the above implementations, that the first information is carried via an RRC message is taken as an example, but the present disclosure is not limited to this, the first information may further be carried via other messages or signaling.

The method in the above implementations may be used in a case where the PCIs of the first cell and the second cell are identical or different, and according to the method in the above implementations, signaling overhead is saved.

In some other implementations, the network device does not need to configure the second cell in advance, but only needs to release the first secondary cell group via the first information and set up a second secondary cell group, wherein the second cell is a special cell in the second secondary cell group. For example, in a case where the terminal equipment may only be configured with one secondary cell group, the configured secondary cell group is an activated secondary cell group. After the network device enters energy saving, the network side, via an RRC message, releases a SCG (a first secondary cell group) which takes the non-energy-saving cell (the first cell) as a special cell, and sets up a SCG (a second secondary cell group) which takes the energy-saving cell (the second cell) as a special cell.

FIG. 7 is another schematic diagram of a method for configuring a network energy-saving cell in the embodiments of the present disclosure.

In the above implementations, as shown in FIG. 7, the network device may further transmit fourth information (702) to the terminal equipment, and enables the terminal equipment to release the second secondary cell group and set up the first secondary cell group via the fourth information. For example, when the network device leaves energy saving, the network side releases a SCG (second secondary cell group) which takes the energy-saving cell (second cell) as a special cell via an RRC message, and sets up a SCG (first secondary cell group) which takes the non-energy-saving cell (first cell) as a special cell.

In the above implementations, that the first information and the fourth information are carried via an RRC message is taken as an example, but the present disclosure is not limited to this, the first information and the fourth information may further be carried via other messages or signaling.

In some further implementations, the first information contains configuration for changing the first cell to be the second cell and a condition for applying the configuration, so that the terminal equipment changes the first cell to be the second cell in a case where the condition is satisfied. For example, when the terminal equipment is currently configured with a SCG (first secondary cell group) which takes the non-energy-saving cell as a special cell, the network device transmits configuration (ConditionalReconfiguration) for changing the non-energy-saving cell to an energy-saving cell to the terminal equipment in advance, and sets a condition for applying the configuration, and when the condition is satisfied, the terminal equipment changes the non-energy-saving cell to be an energy-saving cell.

In the above implementations, there is no limitation on the form of the first information. Different from the previous implementation, this implementation does not adopt immediately effective configuration, but adopts conditional configuration, that is, the first cell is changed into the second cell only when a condition is satisfied, thereby increasing the flexibility of implementation.

In some further implementations, the network device configures at least one second secondary cell group via the first information, and enables the terminal equipment to set an initial state of the second secondary cell group to be of a deactive state; wherein the second cell is a special cell in the second secondary cell group. For example, in a case where the terminal equipment may be configured with multiple secondary cell groups, before the network device enters energy saving, a network side, via an RRC message, configures a SCG (second secondary cell group) which takes the energy-saving cell (second cell) as a special cell to be a SCG of the terminal equipment, and enables the terminal equipment to set the initial state of the SCG to be of a deactive state.

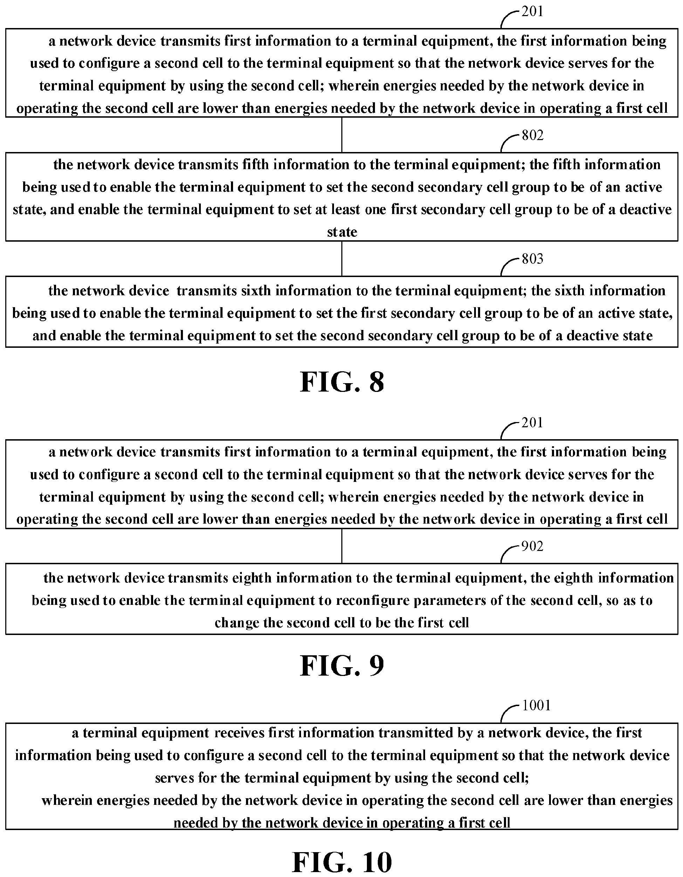

FIG. 8 is another schematic diagram of a method for configuring a network energy-saving cell in the embodiments of the present disclosure.

In the above implementations, as shown in FIG. 8, the network device may further transmit fifth information (802) to the terminal equipment; enables the terminal equipment to set the second secondary cell group to be of an active state via the fifth information, and enables the terminal equipment to set at least one first secondary cell group to be of a deactive state via the fifth information. For example, after the network device enters energy saving, the network device, via an RRC message, sets the state of a SCG (second secondary cell group) which takes the energy-saving cell (second cell) as a special cell to be of an active state, and via an RRC message, sets the state of a SCG (first secondary cell group) which takes the non-energy-saving cell (first cell) as a special cell to be of a deactive state.

In the above implementations, as shown in FIG. 8, the network device may further transmit sixth information (803) to the terminal equipment; enables the terminal equipment to set the first secondary cell group to be of an active state via the sixth information, and enables the terminal equipment to set the second secondary cell group to be of a deactive state via the sixth information. For example, after the network device leaves energy saving, the network device, via an RRC message, sets the state of a SCG (first secondary cell group) which takes the non-energy-saving cell (first cell) as a special cell to be of an active state, and via an RRC message, sets the state of a SCG (second secondary cell group) which takes the energy-saving cell (second cell) as a special cell to be of a deactive state.

In the above implementations, that the first information, the fifth information and the sixth information are carried via an RRC message is taken as an example, but the present disclosure is not limited to this, the first information, the fifth information and the sixth information may further be carried via other messages or signaling, for example, the fifth information and the sixth information may further be carried via a PDCCH or DCI.

In some further implementations, the first information contains configuration of at least one second secondary cell group which takes the second cell as a special cell and a condition for activating the second secondary cell group and deactivating at least one first secondary cell group, so that the terminal equipment activates the second secondary cell group and deactivates the first secondary cell group in a case the condition is satisfied.

In the above implementations, there is no limitation on the form of the first information. Different from the previous implementation, this implementation does not adopt immediately effective configuration, but adopts conditional configuration, that is, the second secondary cell group is activated and the first secondary cell group is deactivated only when a condition is satisfied, thereby increasing the flexibility of implementation.

In some further implementations, the network device, via the first information, configures at least one second secondary cell group which takes the second cell as a special cell, and configures a transition timer for the terminal equipment, so that the terminal equipment starts or restarts the transition timer when a preset condition is satisfied, and deactivates or releases the first secondary cell group and activates or sets up the second secondary cell group when the transition timer expires, or changes parameter configuration of the first secondary cell group to parameter configuration of the second secondary cell group when the transition timer expires.

For example, the network device, via an RRC message, configures at least one SCG (second secondary cell group) which takes the energy-saving cell as a special cell, and configures a transition timer for a SCG (first secondary cell group) which takes the non-energy-saving cell as a special cell. If the preset condition is satisfied, the terminal equipment starts or restarts the transition timer. When the transition timer expires, the terminal equipment deactivates or releases the first secondary cell group, and then activates or sets up the second secondary cell group. Or, when the transition timer expires, the terminal equipment updates parameter configuration of the first secondary cell group to parameter configuration of the second secondary cell group.

In the above implementations, the transition timer is for the first secondary cell group, the present disclosure is not limited to this, the transition timer may further be for the second secondary cell group.

In the above implementations, the network device may deactivate or release the first secondary cell group and activate or set up the second secondary cell group when no data is transmitted by the terminal equipment, or change parameter configuration of the first secondary cell group to parameter configuration of the second secondary cell group. The preset condition includes at least one of the following:
activating or setting up the first secondary cell group;
a PDCCH is received on the first secondary cell group;
PDCCH schedules an uplink grant or downlink resources on the first secondary cell group;
uplink CG data is transmitted on the first secondary cell group; and
downlink CG data is received on the first secondary cell group.

For example, when activating or setting up the first secondary cell group, the terminal equipment starts the transition timer, or when a PDCCH is received on the first secondary cell group, and/or when the PDCCH schedules an uplink grant or downlink resources on the first secondary cell group, and/or when uplink CG data is transmitted on the first secondary cell group, and/or, when downlink CG data is received on the first secondary cell group, the terminal equipment restarts the transition timer.

In the above implementations, that the first information is carried via an RRC message is taken as an example, but the present disclosure is not limited to this, the first information may further be carried via other messages or signaling.

The method in each of the above implementations may be used when the PCIs of the first cell and the second cell are identical or different. According to the method in each of the above implementations, when the second cell is configured via the RRC message as a special cell in a SCG of a terminal equipment, the terminal equipment may start to obtain timing synchronization information of the cell, and when a network side activates the SCG, the SCG may be immediately used to perform data transmission, which reduces service interruption time of the terminal equipment.

In some embodiments, the first cell is a primary cell of a terminal equipment, that is, the network device changes a non-energy-saving primary cell of the terminal equipment into an energy-saving cell.

In some implementations, the network device does not need to configure the second cell in advance, but only needs to reconfigure parameters of the first cell via first information to change the first cell to be the second cell. For example, after the network device enters energy saving, a network side modifies (updates) parameter configuration of a PCell of the terminal equipment via a system information update process (i.e. the first information is system information), so as to configure (change) the non-energy-saving PCell (first cell) to an energy-saving PCell (second cell).

In the above implementations, because the system information update process does not support changing the PCI of a cell, this method is used in a case where PCIs of the non-energy-saving cell (the first cell) and the energy-saving cell (the second cell) are identical. In addition, signaling overhead is saved according to this method.

FIG. 9 is another schematic diagram of a method for configuring a network energy-saving cell in the embodiments of the present disclosure.

In some other implementations, as shown in FIG. 9, the network device may further transmit eighth information (902) to the terminal equipment, and enables the terminal equipment to reconfigure parameters of the second cell via the eighth information, so as to change the second cell to be the first cell. For example, when the network device enters energy saving, the network side switches the terminal equipment from the non-energy-saving cell (the first cell) to the energy-saving cell (the second cell), and reconfigures PCell parameters of the terminal equipment via an RRC message (a switch command). When the network device leaves energy saving, the network side switches the terminal equipment from the energy-saving cell (the second cell) to the non-energy-saving cell (the first cell).

In the above implementations, since the reconfiguration parameter of PCell contains a target cell PCI, this method may be used in a case where PCIs of the non-energy-saving cell (the first cell) and the energy-saving cell (the second cell) are identical or different. In addition, according to this method, service interruption time of the terminal equipment is reduced.

In some further implementations, the first information includes configuration for changing the first cell to be the second cell and a condition for applying the configuration, so that the terminal equipment changes the first cell to be the second cell in a case where the condition is satisfied. For example, when the terminal equipment is currently configured with a non-energy-saving PCell (first cell), the network device configures in advance configuration (ConditionalReconfiguration) for changing the non-energy-saving PCell (first cell) to be an energy-saving PCell (second cell) to the terminal equipment in advance, and sets a condition for applying the configuration, and when the condition is satisfied, the terminal equipment changes non-energy-saving PCell to be an energy-saving PCell. Different from the previous implementation, this implementation does not adopt immediately effective configuration, but adopts conditional configuration, that is, the first cell is changed into the second cell only when a condition is satisfied, thereby increasing the flexibility of implementation.

Each of the above implementations only exemplarily describes the embodiments of the present disclosure, but the present disclosure is not limited to this, appropriate modifications may be further made based on each of the above implementations. For example, each of the above implementations may be used individually, or one or more of the above implementations may be combined. Each of the above implementations may not only be used for conversion between an energy-saving cell (the second district) and a non-energy-saving district (the first cell), but also for conversion between energy-saving cells with different energy saving degrees (light energy saving, medium energy saving, deep energy saving). Different energy saving degrees depend on configuration of a network device to the second cell, as described above, description is omitted here.

According to the method in the above embodiments, it may realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

### Embodiments of a second aspect

Embodiments of the present disclosure provide a method for configuring a network energy-saving cell. The method relates to processing at a terminal equipment side corresponding to the method in the embodiments of the first aspect, wherein the same contents as the embodiments of the first aspect are not repeated.

FIG. 10 is a schematic diagram of a method for configuring a network energy-saving cell in the embodiments of the present disclosure. As shown in FIG. 10, the method includes:
1001, a terminal equipment receives first information transmitted by a network device, the first information being used to configure a second cell to the terminal equipment so that the network device serves for the terminal equipment by using the second cell; wherein energies needed by the network device in operating the second cell are lower than energies needed by the network device in operating a first cell.

In the embodiments of the present disclosure, contents related to the first and second cells have been described in the embodiments of the first aspect, and are not repeated here.

In some embodiments, the first cell is a configured or activated secondary cell of a terminal equipment, and the first information configures at least one of the second cells as a secondary cell of the terminal equipment, and configures a transition timer.

In the above embodiments, the terminal equipment starts or restarts the transition timer when a preset condition is satisfied, and the terminal equipment deactivates the first cell and activate the second cell when the transition timer expires.

In the above embodiments, the preset condition may include at least one of the following:
activating the first cell;
a physical downlink control channel PDCCH is received on a currently activated first cell;
PDCCH schedules an uplink grant or downlink resources on the currently activated first cell;
uplink configuration grant CG data is transmitted on the currently activated first cell; and
downlink configuration grant CG data is received on the currently activated first cell.

For example, when activating the first cell, the terminal equipment starts the transition timer, and when other conditions are satisfied, the terminal equipment restarts the transition timer, and when the transition timer expires, the terminal equipment deactivates the first cell and activates the second cell.

In some embodiments, the first cell is a special cell SpCell in a configured or activated first secondary cell group SCG of a terminal equipment, and the first information contains configuration for changing the first cell to be the second cell and a condition for applying the configuration.

In the above embodiments, the terminal equipment changes the first cell to be the second cell when the condition is satisfied.

In some embodiments, the first cell is a special cell SpCell in a configured or activated first secondary cell group SCG of a terminal equipment, and the first information contains configuration of at least one second secondary cell group which takes the second cell as a special cell, and conditions for activating the second secondary cell group and deactivating at least one first secondary cell group.

In the above embodiments, the terminal equipment activates the second secondary cell group and deactivates the first secondary cell group when the condition is satisfied.

In some embodiments, the first cell is a special cell SpCell in a configured or activated first secondary cell group SCG of a terminal equipment, and the first information configures at least one second secondary cell group taking the second cell as a special cell, and configures a transition timer.

In the above embodiments, the terminal equipment starts or restarts the transition timer when a preset condition is satisfied, and deactivates or releases the first secondary cell group and activates or sets up the second secondary cell group when the transition timer expires, or changes parameter configuration of the first secondary cell group to parameter configuration of the second secondary cell group when the transition timer expires.

In the above embodiments, the preset condition includes at least one of the following:
activating or setting up a first secondary cell group;
a PDCCH on the first secondary cell group is received;
PDCCH schedules an uplink grant or downlink resources on the first secondary cell group;
uplink CG data is transmitted on the first secondary cell group; and
downlink CG data is received on the first secondary cell group.

For example, when activating or setting up the first secondary cell group, the terminal equipment starts the transition timer, and when other conditions are satisfied, the terminal equipment restarts the transition timer, and when the transition timer expires, the terminal equipment deactivates or releases the first secondary cell group and activates or sets up the second secondary cell group, or changes parameter configuration of the first secondary cell group to parameter configuration of the second secondary cell group.

In some embodiments, the first cell is a primary cell of a terminal equipment, and the first information includes configuration for changing the first cell to be the second cell and a condition for applying the configuration.

In the above embodiments, the terminal equipment changes the first cell to be the second cell when the condition is satisfied.

Each of the above implementations only exemplarily describes the embodiments of the present disclosure, but the present disclosure is not limited to this, appropriate modifications may be further made based on each of the above implementations. For example, each of the above implementations may be used individually, or one or more of the above implementations may be combined.

According to the method in the above embodiments, it may realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

### Embodiments of a third aspect

Embodiments of the present disclosure provide an apparatus for configuring a network energy-saving cell. The apparatus may, for example, be a network device, or may be one or more parts or components configured in the network device. The apparatus in the embodiments of the present disclosure corresponds to the method in the embodiments of the first aspect, the contents same as those in the embodiments of the first aspect are not repeated.

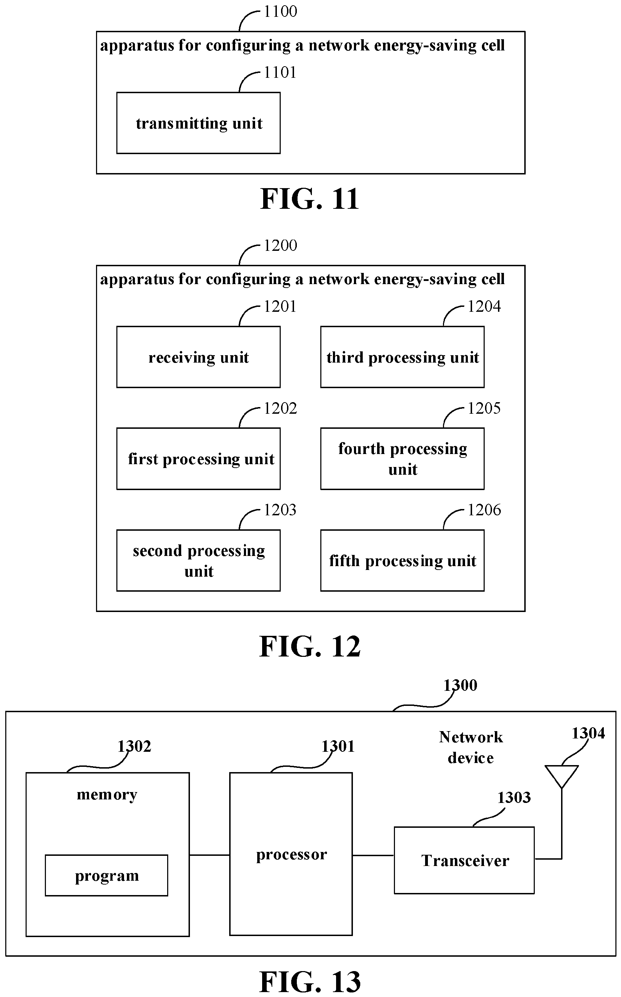

FIG. 11 is a schematic diagram of an example of an apparatus for configuring a network energy-saving cell in the embodiments of the present disclosure. As shown in FIG. 11, the apparatus 1100 for configuring a network energy-saving cell includes:
a transmitting unit 1101, configured to transmit first information to a terminal equipment, the first information being used to configure a second cell to the terminal equipment so that the network device serves for the terminal equipment by using the second cell; wherein energies needed by the network device in operating the second cell are lower than energies needed by the network device in operating a first cell.

In some embodiments, the second cell possesses one of the following characteristics or a combination thereof:
a transmission period of a common signal of the second cell is longer than a transmission period of a common signal of the first cell;
the network device stops transmission of a part of downlink time units of the second cell;
the network device does not transmit a part of signals of the second cell or transmit a simplified common signal of the second cell;
the number of transmission antenna elements of the second cell is less than the number of transmission antenna elements of the first cell;
the number of symbols of a channel state information reference signal CSI-RS of the second cell is less than the number of symbols of a CSI-RS of the first cell;
the number of transmission beams of the second cell is less than the number of transmission beams of the first cell;
the number of multiple-input-multiple-output MIMO antenna ports of the second cell is less than the number of MIMO antenna ports of the first cell;
a service bandwidth of the second cell is different from a service bandwidth of the first cell; and
transmission power of the second cell is lower than transmission power of the first cell.

In the above embodiments, the common signal may include at least one of the following: a synchronization signal block SSB, a synchronization signal SS, a master information block MIB, a physical broadcast channel PBCH, a system information block SIB1, system information SI, and paging.

In some embodiments, frequency-domain resources occupied by the first cell and the second cell are different, and the network device operates the first cell and the second cell simultaneously, or, the network device does not operate the first cell and the second cell simultaneously.

In some embodiments, frequency-domain resources occupied by the first cell and the second cell are identical, and the network device does not operate the first cell and the second cell simultaneously.

In the above embodiments, the transmitting unit 1101 uses different time domain resources to transmit signals of the first cell and of the second cell.

In the above embodiments, physical cell identifiers (PCIs) of the first cell and the second cell may be different.

In the above embodiments, the transmitting unit 1101 transmits the first information to the terminal equipment before the second cell is operated.

In the above embodiments, the PCIs of the first cell and the second cell may further be identical.

In some embodiments, the first cell is a configured or activated secondary cell of a terminal equipment.

In the above embodiments, in one implementation, the network device reconfigures parameters of at least one first cell via first information to change the first cell to be the second cell.

In the above embodiments, in another implementation, the network device configures at least one second cell to be a secondary cell of the terminal equipment via the first information, and enables the terminal equipment to set an initial state of the second cell to be of a deactive state.

In the above implementations, the transmitting unit 1101 may further transmit second information to the terminal equipment; set the state of the second cell to be of an active state via the second information, and enable the terminal equipment to set the state of the first cell to be of a deactive state via the second information.

In the above implementations, the transmitting unit 1101 may further transmit third information to the terminal equipment; enable the terminal equipment to set the state of the second cell to be of a deactive state via the third information, and enable the terminal equipment to set the state of the first cell to be of an active state via the third information.

In the above embodiments, in a further implementation, the network device configures at least one second cell to be a secondary cell of a terminal equipment via the first information, and configures a transition timer for the terminal equipment, so that the terminal equipment starts or restarts the transition timer when a preset condition is satisfied, and deactivates the first cell and activates the second cell when the transition timer expires.

In the above implementations, the preset condition may include at least one of the following:
activating the first cell;
a physical downlink control channel PDCCH is received on a currently activated first cell;
PDCCH schedules an uplink grant or downlink resources on the currently activated first cell;
uplink configuration grant CG data is transmitted on the currently activated first cell; and
downlink configuration grant CG data is received on the currently activated first cell.

In some other embodiments, the first cell is a special cell SpCell in a configured or activated first secondary cell group SCG of a terminal equipment.

In the above embodiments, in one implementation, the network device reconfigures parameters of the first cell via first information to change the first cell of the terminal equipment to be the second cell.

In the above embodiments, in another implementation, the network device releases the first secondary cell group via the first information and sets up a second secondary cell group, wherein the second cell is a special cell in the second secondary cell group.

In the above implementations, the transmitting unit 1101 may further transmit fourth information to the terminal equipment, and enables the terminal equipment to release the second secondary cell group and enables the terminal equipment to set up the first secondary cell group via the fourth information.

In the above embodiments, in a further implementation, the first information contains configuration for changing the first cell to be the second cell and a condition for applying the configuration, so that the terminal equipment changes the first cell to be the second cell in a case where the condition is satisfied.

In the above embodiments, in a further implementation, the network device configures at least one second secondary cell group via the first information, and enables the terminal equipment to set an initial state of the second secondary cell group to be of a deactive state; wherein the second cell is a special cell in the second secondary cell group.

In the above implementations, the transmitting unit 1101 may further transmit fifth information to the terminal equipment; enables the terminal equipment to set the second secondary cell group to be of an active state via the fifth information, and enables the terminal equipment to set the at least one first secondary cell group to be of a deactive state via the fifth information.

In the above implementations, the transmitting unit 1101 may further transmit sixth information to the terminal equipment; enables the terminal equipment to set the first secondary cell group to be of an active state via the sixth information, and enables the terminal equipment to set the second secondary cell group to be of a deactive state via the sixth information.

In the above embodiments, in a further implementation, the first information contains configuration of at least one second secondary cell group which takes the second cell as a special cell and a condition for activating the second secondary cell group and deactivating at least one first secondary cell group, so that the terminal equipment activates the second secondary cell group and deactivates the first secondary cell group in a case where the condition is satisfied.

In the above embodiments, in a further implementation, the network device, via the first information, configures at least one second secondary cell group which takes the second cell as a special cell, and configures a transition timer for the terminal equipment, so that the terminal equipment starts or restarts the transition timer when a preset condition is satisfied, and deactivates or releases the first secondary cell group and activates or sets up the second secondary cell group when the transition timer expires, or changes parameter configuration of the first secondary cell group to parameter configuration of the second secondary cell group when the transition timer expires.

In the above implementations, the preset condition may include at least one of the following:
activating or setting up the first secondary cell group;
a PDCCH is received on the first secondary cell group;
PDCCH schedules an uplink grant or downlink resources on the first secondary cell group;
uplink CG data is transmitted on the first secondary cell group; and
downlink CG data is received on the first secondary cell group.

In some embodiments, the first cell is a primary cell of a terminal equipment.

In some implementations, the network device reconfigures parameters of the first cell via the first information to change the first cell to be the second cell.

In the above implementations, the first information may include system information, and the network device reconfigures parameters of the first cell via a system information update process to change the first cell to be the second cell.

In the above implementations, the transmitting unit 1101 may further transmit eighth information to the terminal equipment, and enables the terminal equipment to reconfigure parameters of the second cell via the eighth information, so as to change the second cell to be the first cell.

In some other embodiments, the first information includes configuration for changing the first cell to be the second cell and a condition for applying the configuration, so that the terminal equipment changes the first cell to be the second cell in a case where the condition is satisfied.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 1100 for configuring a network energy-saving cell may further include other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the above embodiments, it may realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

### Embodiments of a fourth aspect

Embodiments of the present disclosure provide an apparatus for configuring a network energy-saving cell. The apparatus may, for example, be a terminal equipment, or may be one or more parts or components configured in the terminal equipment. The apparatus in the embodiments of the present disclosure corresponds to the method in the embodiments of the second aspect, the contents same as those in the embodiments of the second aspect are not repeated.

FIG. 12 is a schematic diagram of an example of an apparatus for configuring a network energy-saving cell in the embodiments of the present disclosure. As shown in FIG. 12, the apparatus 1200 for configuring a network energy-saving cell includes:
a receiving unit 1201, configured to receive first information transmitted by a network device, the first information being used to configure a second cell to the terminal equipment so that the network device serves for the terminal equipment by using the second cell; wherein energies needed by the network device in operating the second cell are lower than energies needed by the network device in operating a first cell.

In some embodiments, the first cell is a configured or activated secondary cell of a terminal equipment, and the first information configures at least one of the second cells as a secondary cell of the terminal equipment, and configures a transition timer.

In the above embodiments, as shown in FIG. 12, the apparatus 1200 further includes:
a first processing unit 1202 configured to start or restart the transition timer when a preset condition is satisfied, and deactivate the first cell and activate the second cell when the transition timer expires.

In the above embodiments, the preset condition may include at least one of the following:
activating the first cell;
a physical downlink control channel PDCCH is received on a currently activated first cell;
PDCCH schedules an uplink grant or downlink resources on the currently activated first cell;
uplink configuration grant CG data is transmitted on the currently activated first cell; and
downlink configuration grant CG data is received on the currently activated first cell.

In some embodiments, the first cell is a special cell SpCell in a configured or activated first secondary cell group SCG of a terminal equipment, and the first information contains configuration for changing the first cell to be the second cell and a condition for applying the configuration.

In the above embodiments, as shown in FIG. 12, the apparatus 1200 further includes:
a second processing unit 1203 configured to change the first cell into the second cell when the condition is satisfied.

In some embodiments, the first cell is a special cell SpCell in a configured or activated first secondary cell group SCG of a terminal equipment, and the first information contains configuration of at least one second secondary cell group which takes the second cell as a special cell, and conditions for activating the second secondary cell group and deactivating at least one first secondary cell group.

In the above embodiments, as shown in FIG. 12, the apparatus 1200 further includes:
a third processing unit 1204 configured to activate the second secondary cell group and deactivate the first secondary cell group when the condition is satisfied.

In some embodiments, the first cell is a special cell SpCell in a configured or activated first secondary cell group SCG of a terminal equipment, and the first information configures at least one second secondary cell group taking the second cell as a special cell, and configures a transition timer.

In the above embodiments, as shown in FIG. 12, the apparatus 1200 further includes:
a fourth processing unit 1205 configured to start or restart the transition timer when a preset condition is satisfied, and deactivate or release the first secondary cell group and activate or set up the second secondary cell group when the transition timer expires, or change parameter configuration of the first secondary cell group to parameter configuration of the second secondary cell group when the transition timer expires.

In the above embodiments, the preset condition may include at least one of the following:
activating or setting up the first secondary cell group;
a PDCCH is received on the first secondary cell group;
PDCCH schedules an uplink grant or downlink resources on the first secondary cell group;
uplink CG data is transmitted on the first secondary cell group; and
downlink CG data is received on the first secondary cell group.

In some embodiments, the first cell is a primary cell of a terminal equipment, and the first information includes configuration for changing the first cell to be the second cell and a condition for applying the configuration.

In the above embodiments, as shown in FIG. 12, the apparatus 1200 further includes:
a fifth processing unit 1206 configured to change the first cell into the second cell when the condition is satisfied.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 1200 for configuring a network energy-saving cell may further include other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the above embodiments, it may realize that when a network device enters energy saving, an energy-saving cell still may be used to serve for a terminal equipment. For example, when the network device enters energy saving, a terminal equipment in an IDLE/INACTIVE state is capable of normally camping on an energy-saving cell; or, a terminal equipment in a connected state may continue to perform uplink and downlink data transmissions via an energy-saving cell. In this way, it may be avoided that a terminal equipment in the energy-saving cell is migrated to an adjacent cell, resulting in traffic interruption of the terminal equipment and increasing a load level of the adjacent cell.

### Embodiments of a fifth aspect

The embodiments of the present disclosure further provide a communication system, including a network device and a terminal equipment.

In some embodiments, the network device includes the apparatus described in the embodiments of the third aspect, and is configured to perform the method described in the embodiments of the first aspect. Since the method has been described in details in the embodiments of the first aspect, its contents are incorporated here and are not repeated.

In some embodiments, athe terminal equipment includes the apparatus described in the embodiments of the fourth aspect, and is configured to perform the method described in the embodiments of the second aspect. Since the method has been described in details in the embodiments of the second aspect, its contents are incorporated here and are not repeated.

The embodiments of the present disclosure further provide a network device, such as a gNB (a base station in NR), etc.

FIG. 13 is a schematic diagram of a network device in the embodiments of the present disclosure. As shown in FIG. 13, the network device 1300 may include: a central processor (CPU)1301 and a memory 1302; the memory 1302 is coupled to the central processor 1301. The memory 1302 may store various data; moreover, also stores a program for information processing, and executes the program under the control of the central processor 1301, so as to receive various information transmitted by the terminal equipment and transmit various information to the terminal equipment.

In some embodiments, functions of the apparatus described in the embodiments of the third aspect may be integrated into a central processor 1301, the central processor 1301 implements the functions of the apparatus described in the embodiments of the third aspect, the functions of the apparatus described in the embodiments of the third aspect are incorporated here and are not repeated here.

In some other embodiments, the apparatus described in the embodiments of the third aspect may be configured separately from the central processor 1301, for example the apparatus described in the embodiments of the third aspect may be configured as a chip connected to the central processor1301, functions of the apparatus described in the embodiments of the third aspect are realized under the control of the central processor 1301.

In addition, as shown in FIG. 13, the network device 1300 may further include: a transceiver 1303 and an antenna 1304, etc.; wherein the functions of said components are similar to relevant arts, which are not repeated here. It's worth noting that the network device 1300 does not have to include all the components shown in FIG. 13. Moreover, the network device 1300 may further include components not shown in FIG. 13, related arts may be referred to.

The embodiments of the present disclosure further provide a terminal equipment, such as a UE.

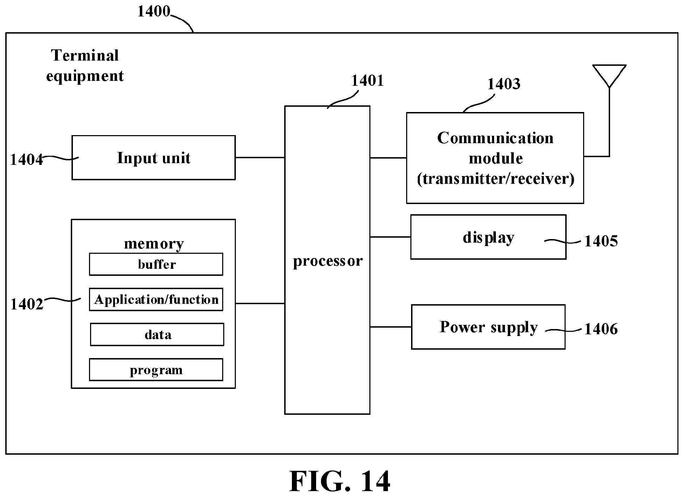

FIG. 14 is a schematic diagram of a terminal equipment in the embodiments of the present disclosure. As shown in FIG. 14, the terminal equipment 1400 may include a processor 1401 and a memory 1402; the memory 1402 stores data and programs, and is coupled to the processor 1401. It's worth noting that this figure is exemplary; other types of structures may also be used to supplement or replace this structure, so as to realize a telecommunication function or other functions.

In some embodiments, functions of the apparatus in the embodiments of the fourth aspect may be integrated into the processor 1401, wherein the processor 1401 may be configured to execute a program to implement the method as described in the embodiments of the second aspect, the contents of which are incorporated here and are not described repeatedly here.

In some other embodiments, the apparatus in the embodiments of the fourth aspect may be configured separately from the processor 1401, for example the apparatus in the embodiments of the fourth aspect may be configured as a chip connected to the processor 1401, functions of the apparatus in the embodiments of the fourth aspect are realized under the control of the processor 1401.

As shown in FIG. 14, the terminal equipment 1400 may further include: a communication module 1403, an input unit 1404, a display 1405 and a power supply 1406. The functions of said components are similar to related arts, which are not repeated here. It's worth noting that the terminal equipment 1400 does not have to include all the components shown in FIG. 14, said components are not indispensable. Moreover, the terminal equipment 1400 may also include components not shown in FIG. 14, relevant technologies can be referred to.

The embodiments of the present disclosure further provide a computer program, wherein when a network device executes the program, the program enables the terminal equipment to execute the method described in the embodiments of the first aspect.

The embodiments of the present disclosure further provide a storage medium in which a computer program is stored, wherein the computer program enables a network device to execute the method described in the embodiments of the first aspect.

The embodiments of the present disclosure further provide a computer program, wherein when a terminal equipment executes the program, the program enables the terminal equipment to execute the method described in the embodiments of the second aspect.

The embodiments of the present disclosure further provide a storage medium in which a computer program is stored, wherein the computer program enables a terminal equipment to execute the method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. A method for configuring a network energy-saving cell, wherein the method includes:
   a network device transmits first information to a terminal equipment, the first information being used to configure a second cell to the terminal equipment so that the network device serves for the terminal equipment by using the second cell;
   wherein energies needed by the network device in operating the second cell are lower than energies needed by the network device in operating a first cell.
2. The method according to Supplement 1, wherein the second cell possesses one of the following characteristics or a combination thereof:
   a transmission period of a common signal of the second cell is longer than a transmission period of a common signal of the first cell;
   the network device stops transmission of a part of downlink time units of the second cell;
   the network device does not transmit a part of signals of the second cell or transmit a simplified common signal of the second cell;
   the number of transmission antenna elements of the second cell is less than the number of transmission antenna elements of the first cell;
   the number of symbols of a channel state information reference signal CSI-RS of the second cell is less than the number of symbols of a CSI-RS of the first cell;
   the number of transmission beams of the second cell is less than the number of transmission beams of the first cell;
   the number of multiple-input-multiple-output MIMO antenna ports of the second cell is less than the number of MIMO antenna ports of the first cell;
   a service bandwidth of the second cell is different from a service bandwidth of the first cell; and
   transmission power of the second cell is lower than transmission power of the first cell.
3. The method according to Supplement 2, wherein
   the common signal includes at least one of the following: a synchronization signal block SSB, a synchronization signal SS, a master information block MIB, a physical broadcast channel PBCH, a system information block SIB1, system information SI, and paging.
4. The method according to Supplement 1, wherein
   frequency-domain resources occupied by the first cell and the second cell are different; and
   the network device operates the first cell and the second cell simultaneously, or the network device does not operate the first cell and the second cell simultaneously.
5. The method according to Supplement 1, wherein
   frequency-domain resources occupied by the first cell and the second cell are identical, and the network device does not operate the first cell and the second cell simultaneously.
6. The method according to Supplement 5, wherein
   the network device uses different time domain resources to transmit signals of the first cell and of the second cell.
7. The method according to Supplement 5, wherein
   physical cell identifiers PCIs of the first cell and the second cell are different.
8. The method according to Supplement 7, wherein
   the network device transmits the first information to the terminal equipment before the second cell is operated.
9. The method according to Supplement 5, wherein
   PCIs of the first cell and the second cell are identical.
10. The method according to any one of Supplements 1 to 9, wherein
   the first cell is a configured or activated secondary cell of the terminal equipment.
11. The method according to Supplement 10, wherein
   the network device reconfigures parameters of at least one of the first cells via the first information, so as to change the first cell to be the second cell.
12. The method according to Supplement 10, wherein
   the network device configures at least one of the second cells to be a secondary cell of the terminal equipment via the first information, and enables the terminal equipment to set an initial state of the second cell to be of a deactive state.
13. The method according to Supplement 12, wherein the method further includes:
   the network device transmits second information to the terminal equipment;
   the network device enables the terminal equipment to set a state of the second cell to be of an active state via the second information, and enables the terminal equipment to set a state of the first cell to be of a deactive state via the second information.
14. The method according to Supplement 13, wherein the method further includes:
   the network device transmits third information to the terminal equipment;
   the network device enables the terminal equipment to set a state of the second cell to be of a deactive state via the third information, and enables the terminal equipment to set a state of the first cell to be of an active state via the third information.
15. The method according to Supplement 10, wherein
   the network device configures at least one of the second cells to be a secondary cell of the terminal equipment via the first information, and configures a transition timer for the terminal equipment, so that the terminal equipment starts or restarts the transition timer when a preset condition is satisfied, and deactivates the first cell and activates the second cell when the transition timer expires.
16. The method according to Supplement 15, wherein the preset condition includes at least one of the following:
   activating the first cell;
   a physical downlink control channel PDCCH is received on a currently activated first cell;
   PDCCH schedules an uplink grant or downlink resources on the currently activated first cell;
   uplink configuration grant CG data is transmitted on the currently activated first cell; and
   downlink configuration grant CG data is received on the currently activated first cell.
17. The method according to any one of Supplements 1 to 9, wherein
   the first cell is a special cell SpCell in a configured or activated first secondary cell group SCG of the terminal equipment.
18. The method according to Supplement 17, wherein
   the network device reconfigures parameters of the first cell via the first information, so as to change the first cell of the terminal equipment to be the second cell.
19. The method according to Supplement 17, wherein
   the network device enables the terminal equipment to release the first secondary cell group via the first information, and enables the terminal equipment to set up a second secondary cell group; wherein the second cell is a special cell in the second secondary cell group.
20. The method according to Supplement 19, wherein the method further includes:
   the network device transmits fourth information to the terminal equipment;
   the network device enables the terminal equipment to release the second secondary cell group via the fourth information, and enables the terminal equipment to set up the first secondary cell group.
21. The method according to Supplement 17, wherein
   the first information includes configuration for changing the first cell to be the second cell and a condition for applying the configuration, so that the terminal equipment changes the first cell to be the second cell in a case where the condition is satisfied.
22. The method according to Supplement 17, wherein
   the network device configures at least one second secondary cell group via the first information, and enables the terminal equipment to set an initial state of the second secondary cell group to be of a deactive state; wherein the second cell is a special cell in the second secondary cell group.
23. The method according to Supplement 22, wherein the method further includes:
   the network device transmits fifth information to the terminal equipment;
   the network device enables the terminal equipment to set the second secondary cell group to be of an active state via the fifth information, and enables the terminal equipment to set at least one of the first secondary cell groups to be of a deactive state via the fifth information.
24. The method according to Supplement 23, wherein the method further includes:
   the network device transmits sixth information to the terminal equipment;
   the network device enables the terminal equipment to set the first secondary cell group to be of an active state via the sixth information, and enables the terminal equipment to set the second secondary cell group to be of a deactive state via the sixth information.
25. The method according to Supplement 17, wherein
   the first information contains configuration of at least one second secondary cell group which takes the second cell as a special cell and a condition for activating the second secondary cell group and deactivating at least one first secondary cell group, so that the terminal equipment activates the second secondary cell group and deactivates the first secondary cell group in a case the condition is satisfied.
26. The method according to Supplement 17, wherein
   the network device, via the first information, configures at least one of the second secondary cell group which takes the second cell as a special cell, and configures a transition timer for the terminal equipment,
   so that the terminal equipment starts or restarts the transition timer when a preset condition is satisfied, and,
   when the transition timer expires, deactivate or release the first secondary cell group and activate or set up the second secondary cell group, or, when the transition timer expires, change parameter configuration of the first secondary cell group into parameter configuration of the second secondary cell group.
27. The method according to Supplement 26, wherein the preset condition includes at least one of the following:
   activating or setting up the first secondary cell group;
   a PDCCH is received on the first secondary cell group;
   PDCCH schedules an uplink grant or downlink resources on the first secondary cell group;
   uplink CG data is transmitted on the first secondary cell group; and
   downlink CG data is received on the first secondary cell group.
28. The method according to any one of Supplements 1 to 9, wherein
   the first cell is a primary cell of the terminal equipment.
29. The method according to Supplement 28, wherein
   the network device reconfigures parameters of the first cell via the first information, so as to change the first cell to be the second cell.
30. The method according to Supplement 29, wherein
   the first information includes system information, and the network device reconfigures parameters of the first cell via a system information update process to change the first cell to be the second cell.
31. The method according to Supplement 29 or 30, wherein the method further includes:
   the network device transmits eighth information to the terminal equipment;
   the network device enables the terminal equipment to reconfigure parameters of the second cell via the eighth information, so as to change the second cell to be the first cell.
32. The method according to Supplement 28, wherein
   the first information includes configuration for changing the first cell to be the second cell and a condition for applying the configuration, so that the terminal equipment changes the first cell to be the second cell in a case where the condition is satisfied.
33. A method for configuring a network energy-saving cell, wherein the method includes:
   a terminal equipment receives first information transmitted by a network device, the first information being used to configure a second cell to the terminal equipment so that the network device serves for the terminal equipment by using the second cell;
   wherein energies needed by the network device in operating the second cell are lower than energies needed by the network device in operating a first cell.
34. The method according to Supplement 33, wherein
   the first cell is a configured or activated secondary cell of the terminal equipment, and the first information configures at least one of the second cells as a secondary cell of the terminal equipment, and configures a transition timer;
   the method further includes:
      the terminal equipment starts or restarts the transition timer when a preset condition is satisfied, and deactivates the first cell and activates the second cell when the transition timer expires.
35. The method according to Supplement 34, wherein
   the preset condition includes at least one of the following:
   activating the first cell;
   a physical downlink control channel PDCCH is received on a currently activated first cell;
   PDCCH schedules an uplink grant or downlink resources on the currently activated first cell;
   uplink configuration grant CG data is transmitted on the currently activated first cell; and
   downlink configuration grant CG data is received on the currently activated first cell.
36. The method according to Supplement 33, wherein
   the first cell is a special cell SpCell in a configured or activated first secondary cell group SCG of the terminal equipment, and the first information contains configuration for changing the first cell to be the second cell and a condition for applying the configuration;
   the method further includes:
      the terminal equipment changes the first cell to be the second cell when the condition is satisfied.
37. The method according to Supplement 33, wherein
   the first cell is a special cell SpCell in a configured or activated first secondary cell group SCG of the terminal equipment, and the first information contains configuration of at least one second secondary cell group which takes the second cell as a special cell, and conditions for activating the second secondary cell group and deactivating at least one first secondary cell group;
   the method further includes:
      the terminal equipment activates the second secondary cell group and deactivates the first secondary cell group when the condition is satisfied.
38. The method according to Supplement 33, wherein
   the first cell is a special cell SpCell in a configured or activated first secondary cell group SCG of the terminal equipment, and the first information configures at least one second secondary cell group taking the second cell as a special cell, and configures a transition timer;
   the method further includes:
      the terminal equipment starts or restarts the transition timer when a preset condition is satisfied; and,
      when the transition timer expires, deactivate or release the first secondary cell group and activate or set up the second secondary cell group, or, when the transition timer expires, change parameter configuration of the first secondary cell group into parameter configuration of the second secondary cell group.
39. The method according to Supplement 38, wherein the preset condition includes at least one of the following:
   activating or setting up the first secondary cell group;
   a PDCCH is received on the first secondary cell group;
   PDCCH schedules an uplink grant or downlink resources on the first secondary cell group;
   uplink CG data is transmitted on the first secondary cell group; and
   downlink CG data is received on the first secondary cell group.
40. The method according to Supplement 33, wherein
   the first cell is a primary cell of the terminal equipment, and the first information includes configuration for changing the first cell into the second cell and a condition for applying the configuration;
   the method further includes:
      the terminal equipment changes the first cell to be the second cell when the condition is satisfied.
41. A network device, including a memory and a processor, the memory storing a computer program, and the processor being configured to execute the computer program to implement the method according to any one of Supplements 1 to 32.
42. A terminal equipment, including a memory and a processor, the memory storing a computer program, and the processor being configured to execute the computer program to implement the method according to any one of Supplements 33 to 40.
43. A communication system, including the network device according to Supplement 41 and the terminal equipment according to Supplement 42.

## Claims

1. An apparatus for configuring a network energy-saving cell, wherein the apparatus comprises:
a transmitting unit configured to transmit first information to a terminal equipment, the first information being used to configure a second cell to the terminal equipment so that a network device serves for the terminal equipment by using the second cell;
wherein energies needed by the network device in operating the second cell are lower than energies needed by the network device in operating a first cell.

2. The apparatus according to claim 1, wherein the second cell possesses one of the following characteristics or a combination thereof:
a transmission period of a common signal of the second cell is longer than a transmission period of a common signal of the first cell;
the network device stops transmission of a part of downlink time units of the second cell;
the network device does not transmit a part of signals of the second cell or transmit a simplified common signal of the second cell;
the number of transmission antenna elements of the second cell is less than the number of transmission antenna elements of the first cell;
the number of symbols of a channel state information reference signal CSI-RS of the second cell is less than the number of symbols of a CSI-RS of the first cell;
the number of transmission beams of the second cell is less than the number of transmission beams of the first cell;
the number of multiple-input-multiple-output MIMO antenna ports of the second cell is less than the number of MIMO antenna ports of the first cell;
a service bandwidth of the second cell is different from a service bandwidth of the first cell; and
transmission power of the second cell is lower than transmission power of the first cell.

3. The apparatus according to claim 2, wherein
the common signal includes at least one of the following: a synchronization signal block SSB, a synchronization signal SS, a master information block MIB, a physical broadcast channel PBCH, a system information block SIB1, system information SI, and paging.

4. The apparatus according to claim 1, wherein
frequency-domain resources occupied by the first cell and the second cell are different; and
the network device operates the first cell and the second cell simultaneously, or the network device does not operate the first cell and the second cell simultaneously.

5. The apparatus according to claim 1, wherein
frequency-domain resources occupied by the first cell and the second cell are identical, and the network device does not operate the first cell and the second cell simultaneously.

6. The apparatus according to claim 5, wherein
physical cell identifiers PCIs of the first cell and the second cell are different.

7. The apparatus according to claim 5, wherein
PCIs of the first cell and the second cell are identical.

8. The apparatus according to claim 1, wherein
the first cell is a configured or activated secondary cell of the terminal equipment.

9. The apparatus according to claim 8, wherein
the first information is used to configure at least one of the second cells as a secondary cell of the terminal equipment, and enable the terminal equipment to set an initial state of the second cell to be of a deactive state.

10. The apparatus according to claim 9, wherein
the transmitting unit further transmits second information to the terminal equipment, the second information being used to enable the terminal equipment to set a state of the second cell to be of an active state, and enable the terminal equipment to set a state of the first cell to be of a deactive state.

11. The apparatus according to claim 8, wherein
the first information is used to configure at least one of the second cells as a secondary cell of the terminal equipment, and configure a transition timer for the terminal equipment, so that the terminal equipment starts or restarts the transition timer when a preset condition is satisfied, and deactivates the first cell and activates the second cell when the transition timer expires.

12. The apparatus according to claim 1, wherein
the first cell is a special cell SpCell in a configured or activated first secondary cell group SCG of the terminal equipment.

13. The apparatus according to claim 12, wherein
the first information is used to enable the terminal equipment to release the first secondary cell group, and enable the terminal equipment to set up a second secondary cell group; wherein the second cell is a special cell in the second secondary cell group.

14. The apparatus according to claim 1, wherein
the first cell is a primary cell of the terminal equipment.

15. The apparatus according to claim 14, wherein
the first information is used to reconfigure parameters of the first cell, so as to change the first cell into the second cell.

16. An apparatus for configuring a network energy-saving cell, wherein the apparatus comprises:
a receiving unit configured to receive first information transmitted by a network device, the first information being used to configure a second cell to the terminal equipment so that the network device serves for the terminal equipment by using the second cell;
wherein energies needed by the network device in operating the second cell are lower than energies needed by the network device in operating a first cell.

17. The apparatus according to claim 16, wherein
the first cell is a configured or activated secondary cell of the terminal equipment, and the first information is used to configure at least one of the second cells as a secondary cell of the terminal equipment, and configure a transition timer;
and the apparatus further comprises:
a first processing unit configured to start or restart the transition timer when a preset condition is satisfied, and deactivate the first cell and activate the second cell when the transition timer expires.

18. The apparatus according to claim 16, wherein
the first cell is a special cell SpCell in a configured or activated first secondary cell group SCG of the terminal equipment, and the first information configures at least one second secondary cell group taking the second cell as a special cell, and configures a transition timer;
and the apparatus further comprises:
a fourth processing unit configured to start or restart the transition timer when a preset condition is satisfied, and,
when the transition timer expires, deactivate or release the first secondary cell group and activate or set up the second secondary cell group, or, when the transition timer expires, change parameter configuration of the first secondary cell group into parameter configuration of the second secondary cell group.

19. The apparatus according to claim 16, wherein
the first cell is a primary cell of the terminal equipment, and the first information includes configuration for changing the first cell into the second cell and a condition for applying the configuration;
and the apparatus further comprises:
a second processing unit configured to change the first cell into the second cell when the condition is satisfied.

20. A network device, comprising a memory and a processor, the memory storing a computer program, and the processor being configured to execute the computer program to carry out a method as below:
transmitting first information to a terminal equipment, the first information being used to configure a second cell to the terminal equipment so that the network device serves for the terminal equipment by using the second cell; wherein energies needed by the network device in operating the second cell are lower than energies needed by the network device in operating a first cell.
